# EUROPEAN PATENT APPLICATION

(11) **EP 4 506 399 A1**
(43) Date of publication of application: **12.02.2025**
(21) Application number: 23784563.1
(22) Date of filing: 28.02.2023
(51) Int. Cl.: C08J 9/02

(54) **BLOWING AGENT, FOAMING RESIN COMPOSITION, POLYURETHANE UREA RESIN FOAM, AND PRODUCTION METHOD FOR POLYURETHANE UREA FOAM**

(30) Priority: 06.04.2022 JP 2022063537
(71) Applicant: MITSUBISHI GAS CHEMICAL COMPANY, INC., Chiyoda-ku Tokyo 100-8324 (JP)
(72) Inventor: KAWASHIMA Yuki, Hiratsuka-shi, Kanagawa 254-0016 (JP); KOUNO Kazuki, Hiratsuka-shi, Kanagawa 254-0016 (JP)
(74) Representative: Gille Hrabal Partnerschaftsgesellschaft mbB Patentanwälte
(86) International application number: PCT/JP2023/007189
(87) International publication number: WO 2023/195270

(57) **Abstract**

A blowing agent for obtaining a polyurethane urea resin foam, including a reaction product (a2) of an amine compound (a1) and carbon dioxide, the amine compound (a1) including at least one selected from the group consisting of xylylenediamine and derivatives thereof, and bis(aminomethyl)cyclohexane and derivatives thereof, wherein a water content of the blowing agent is 15% by mass or less.

## Description

### Technical Field

The present invention relates to a blowing agent, a foamable resin composition, a polyurethane urea resin foam, and a method for producing a polyurethane urea resin foam.

### Background Art

Polyurethane resins have, for example, excellent mechanical strength, flexibility, abrasion resistance, and oil resistance, and are widely used in various industrial fields. In recent years, a polyurethane urea resin, which has both a urethane bond and a urea bond in the chemical structure, has been developed as a new polyurethane resin, and its industrial applications are expected.

On the other hand, it has been studied to impart functions such as thermal insulation property, sound insulation property and lightweight property to polyurethane resins by foaming the polyurethane resins.

Examples of techniques relating to polyurethane resin foams include those described in Patent Literatures 1 and 2.

Patent Literature 1 describes a method for producing a polyurethane foam molded article, which is characterized in that in the production of a flexible or semi-rigid polyurethane foam by subjecting a polyhydroxy compound and an organic polyisocyanate to a one-shot method or a prepolymer method in the presence of a blowing gent, a catalyst, and other foaming aid, one or several kinds of aliphatic or alicyclic primary or secondary diamine carbonates are added, foaming is performed to give a foam at a temperature at which the carbonates are decomposed, or lower, then immediately or after the lapse of a certain period of time, the foam is retained in a desired shape, and the foam is physically subjected to expansion and contraction or bending processing and is simultaneously fixed by the crosslinking reaction with dissociated amino groups at a temperature at which the amine carbonates are thermally decomposed, or higher.

Patent Literature 2 describes a method for producing a polyurethane foam, which is characterized in that in the production of a flexible polyurethane foam from a polyhydroxy compound, a polyisocyanate, water and/or other blowing agent, a catalyst, a foam stabilizer, other additives, etc., a carbonate of an aliphatic, or aromatic ring-containing aliphatic, or alicyclic primary or secondary diamine is added.

### Citation List

### Patent Literature

PTL1: JP S50-52175 A
PTL2: JP S47-35799 A

### Summary of Invention

### Technical Problem

Conventionally, to obtain a foam, a blowing agent is necessary, and to obtain higher foamability, large amount of the blowing agent need to be used and discarded. In contrast, a polyamine used as a starting material of a polyurethane urea resin can absorb carbon dioxide, so that it is useful as a material that absorbs carbon dioxide to be discarded.

The present invention provides a blowing agent and a foamable resin composition, which can reduce environmental impacts and can provide a polyurethane urea resin foam having improved foamability, and a polyurethane urea resin foam having improved foamability.

### Solution to Problem

The present inventors have conducted intensive studies to solve the above problem. As a result, the present inventors have found that by using a reaction product of an amine compound having a specific structure and carbon dioxide as a blowing agent for obtaining a polyurethane urea resin foam, the amount of use of a conventional environmentally harmful blowing agent can be reduced, and foamability of the resulting polyurethane urea resin foam can be improved. Thus, the present inventors have completed the present invention. Furthermore, the reaction product contributes to reduction of environmental impacts also because it can be produced while absorbing carbon dioxide from the environment.

Accordingly, the present invention provides the following blowing agent, foamable resin composition, polyurethane urea resin foam, and method for producing a polyurethane urea resin foam.

[1] A blowing agent for obtaining a polyurethane urea resin foam, comprising:
   a reaction product (a2) of an amine compound (a1) and carbon dioxide, the amine compound (a1) comprising at least one selected from the group consisting of xylylenediamine and derivatives thereof, and bis(aminomethyl)cyclohexane and derivatives thereof, wherein
   a water content of the blowing agent is 15% by mass or less.
[2] The blowing agent according to [1] above, wherein a percentage increase of a mass of the amine compound (a1) calculated by the following equation when the amine compound (a1) is left to stand in an air environment of 23°C and 50% RH for a week is 10% by mass or more and 50% by mass or less:
   percentage increase of mass of amine compound (a1) [% by mass] = 100 × amount of increase of mass of amine compound (a1) (g) / (mass of amine compound (a1) (g) + amount of increase of mass of amine compound (a1) (g)).
[3] The blowing agent according to [1] or [2] above, wherein a molar ratio of a portion derived from the amine compound (a1) to a portion derived from carbon dioxide [amine compound (a1) / carbon dioxide] is 70/30 to 30/70.
[4] The blowing agent according to any one of [1] to [3] above, being produced by a method of contacting the amine compound (a1) with a gas having a carbon dioxide concentration of 0.01% by volume or more and 10% by volume or less to react the amine compound (a1) with carbon dioxide.
[5] A foamable resin composition for obtaining a polyurethane urea resin foam, comprising:
   a polyisocyanate compound (A), a polyol compound (B), and the blowing agent (C) according to any one of [1] to [4] above.
[6] A foamable resin composition for obtaining a polyurethane urea resin foam, comprising:
   an isocyanate group-terminated prepolymer obtained by reacting a polyisocyanate compound (A) with a polyol compound (B), and the blowing agent (C) according to any one of [1] to [4] above.
[7] The foamable resin composition according to [5] or [6] above, wherein the polyisocyanate compound (A) comprises a compound having 2 or more isocyanate groups.
[8] The foamable resin composition according to any one of [5] to [7] above, wherein a content of a blowing agent other than the blowing agent (C) is 5% by mass or less.
[9] The foamable resin composition according to any one of [5] to [8] above, wherein a ratio of the number of amino groups in the blowing agent (C) to the total amount of the number of hydroxy groups in the polyol compound (B) and the number of amino groups in the blowing agent (C) is 0.02 or more and 1.0 or less.
[10] The foamable resin composition according to any one of [5] to [9] above, wherein a ratio of the number of isocyanate groups in the polyisocyanate compound (A) to the total amount of the number of hydroxy groups in the polyol compound (B) and the number of amino groups in the blowing agent (C) is 0.5 or more and 1.5 or less.
[11] The foamable resin composition according to any one of [5] to [10] above, wherein the polyisocyanate compound (A) is at least one selected from the group consisting of 4,4'-diphenylmethane diisocyanate (MDI) and isophorone diisocyanate (IPDI).
[12] A polyurethane urea resin foam obtained by foam molding the foamable resin composition according to any one of [5] to [11] above.
[13] A method for producing a polyurethane urea resin foam, comprising a step of foam molding the foamable resin composition according to any one of [5] to [11] above.

### Advantageous Effect of Invention

The present invention provides a blowing agent and a foamable resin composition, which can provide a polyurethane urea resin foam having improved foamability, and a polyurethane urea resin foam having improved foamability.

### Description of Embodiments

Embodiments of the present invention (hereinafter simply referred to as "the present embodiment") will be described in detail. The following present embodiments illustrate the present invention and do not limit the present invention. The present invention may be practiced with modification within the gist of the present invention. **In** the present embodiments, preferred specifications may be optionally employed and combination of preferred specifications are more preferred. In the present embodiments, the term "XX to YY" means "XX or more and YY or less."

### [Blowing agent (blowing agent (C))]

The blowing agent of the present invention (the blowing agent described in this section is the same as the blowing agent (C) contained in the foamable resin composition described later) is a blowing agent for obtaining a polyurethane urea resin foam, and is a blowing agent comprising a reaction product (a2) of an amine compound (a1) and carbon dioxide, the amine compound (a1) comprising at least one selected from the group consisting of xylylenediamine and derivatives thereof, and bis(aminomethyl)cyclohexane and derivatives thereof, wherein a water content of the blowing agent is 15% by mass or less.

According to the blowing agent of the present invention, a polyurethane urea resin foam having improved foamability can be obtained by using a reaction product (a2) of a amine compound (a1) and carbon dioxide as a blowing agent for molding a polyurethane urea resin foam.

According to the present invention, a polyurethane urea resin foam having improved foamability can be obtained by using a blowing agent comprising a reaction product (a2) of an amine compound (a1) and carbon dioxide and having a water content of 15% by mass or less. The reason is not clear, but is assumed to be as follows.

The amine compound (a1) has relatively high ability to retain carbon dioxide and has low water absorption property, and therefore, by heating a resin during molding of the resin, an amine compound and carbon dioxide are generated. It is assumed that at this stage, a sufficient amount of carbon dioxide contributes to foaming, so that a polyurethane urea resin foam having improved foamability is obtained.

From the viewpoint of the improvement of the reactivity with carbon dioxide and foamability, the amine compound (a1) comprises at least one selected from the group consisting of xylylenediamine and derivatives thereof, and bis(aminomethyl)cyclohexane and derivatives thereof, and is preferably at least one selected from the group consisting of xylylenediamine and derivatives thereof, and bis(aminomethyl)cyclohexane and derivatives thereof.

As the xylylenediamine and derivatives thereof, at least one selected from the group consisting of o-xylylenediamine and derivatives thereof, m-xylylenediamine and derivatives thereof, and p-xylylenediamine and derivatives thereof can be mentioned; at least one selected from the group consisting of m-xylylenediamine and derivatives thereof and p-xylylenediamine and derivatives thereof is preferred; and m-xylylenediamine and derivatives thereof are more preferred.

As the bis(aminomethyl)cyclohexane and derivatives thereof, at least one selected from the group consisting of 1,3-bis(aminomethyl)cyclohexane and derivatives thereof, 1,4-bis(aminomethyl)cyclohexane and derivatives thereof, and trans-1,4-bis(aminomethyl)cyclohexane and derivatives thereof can be mentioned; and 1,3-bis(aminomethyl)cyclohexane and derivatives thereof are preferred.

Of these, as the amine compound (a1), at least one selected from the group consisting of m-xylylenediamine and derivatives thereof, and 1,3-bis(aminomethyl)cyclohexane and derivatives thereof is more preferred, and m-xylylenediamine and derivatives thereof are even more preferred, from the viewpoint of the improvement of the reactivity with carbon dioxide and foamability.

In this regard, examples of the derivatives of the above various amines include compounds in each of which at least one of the hydrogen atoms in the amino group is substituted by a hydrocarbon group having 1 or more and 10 or less carbon atoms and optionally having at least one substituent selected from the group consisting of an amino group, a cyano group, a phenyl group, a hydroxy group, and a carboxyl group; at least one of the hydrogen atoms in the amino group is preferably substituted by a hydrocarbon group having 1 or more and 10 or less carbon atoms and optionally having at least one substituent selected from the group consisting of an amino group, a cyano group, and a phenyl group; more preferably an alkyl group having 1 or more and 4 or less carbon atoms and optionally having at least one substituent selected from the group consisting of an amino group, a cyano group, and a phenyl group; even more preferably an alkyl group having 1 or more and 4 or less carbon atoms and optionally having at least one substituent selected from the group consisting of an amino group and a cyano group; and still more preferably an alkyl group having 2 or more and 4 or less carbon atoms and optionally having at least one substituent selected from the group consisting of an amino group and a cyano group.

Examples of derivatives of the above amines also include a compound in which at least some of the hydrogen atoms in the cyclic structure are substituted by a hydrocarbon group having 1 or more and 4 or less carbon atoms, preferably an alkyl group having 1 or more and 3 or less carbon atoms, more preferably a methyl group or an ethyl group, and even more preferably a methyl group.

The amine compound (a1) is preferably an amine (primary amine). In other words, the amine compound (a1) is preferably at least one selected from the group consisting of xylylenediamine and bis(aminomethyl)cyclohexane, from the viewpoint of the improvement of the reactivity with carbon dioxide and foamability.

The xylylenediamine is at least one selected from the group consisting of o-xylylenediamine, m-xylylenediamine, and p-xylylenediamine, preferably at least one selected from the group consisting of m-xylylenediamine and p-xylylenediamine, and more preferably m-xylylenediamine.

The bis(aminomethyl)cyclohexane is at least one selected from the group consisting of 1,3-bis(aminomethyl)cyclohexane, 1,4-bis(aminomethyl)cyclohexane, and trans-1,4-bis(aminomethyl)cyclohexane, and preferably 1,3-bis(aminomethyl)cyclohexane.

Of these, the amine compound (a1) is at least one selected from the group consisting of m-xylylenediamine and 1,3-bis(aminomethyl)cyclohexane, and even more preferably m-xylylenediamine, from the viewpoint of the improvement of the reactivity with carbon dioxide and foamability.

These amine compounds (a1) may be used alone or in combination of 2 or more.

The amine compound (a1) has a maximum carbon dioxide release temperature measured by the following method of preferably 200°C or less, more preferably 180°C or less, even more preferably 160°C or less, still more preferably 150°C or less, yet more preferably 140°C or less, yet more preferably 135°C or less, and yet even more preferably 130°C or less to improve carbon dioxide release performance and foamability. The lower limit of the above maximum carbon dioxide release temperature is not particularly limited, and for example 40°C or more.

### (Method)

The amine compound (a1) with carbon dioxide absorbed is heated at a heating rate of 10°C/ minute from 23°C to 250°C, and the temperature at which the amount of heat absorbed due to desorption of carbon dioxide reaches the maximum is measured, and the temperature is defined as the maximum carbon dioxide release temperature. In this regard the amine compound (a1) with carbon dioxide absorbed may be prepared by leaving 5 mmol of the amine compound (a1) to stand in air at 23°C and 50%RH for 24 hours.

The amine compound (a1) has an acid dissociation constant (pKa) of preferably 8.0 or more, more preferably 8.5 or more, and even more preferably 9.0 or more to increase the amount of carbon dioxide absorbed and improve foamability, and the amine compound (a1) has an acid dissociation constant (pKa) of preferably 12.0 or less, more preferably 11.5 or less, and even more preferably 11.0 or less to improve the carbon dioxide release performance and improve foamability.

The acid dissociation constant of the amine compound (a1) is measured by the following measurement method based on acid-base titration.
(1) 0.2 g of the amine compound (a1) is dissolved in 30 mL of purified water.
(2) The acid dissociation constant (pKa) is calculated by titrating the solution prepared in (1) above with 0.1 N perchloric acid - acetic acid solution using an automatic potentiometric titrator (e.g., AT-610 made by Kyoto Electronics Manufacturing Co., Ltd.).

The temperature in the measurement is 25 ± 2°C.

The maximum endothermic temperature of the amine compound (a1) calculated by the following method is preferably 130°C or more, more preferably 140°C or more, and even more preferably 150°C or more in order to suppress weight reduction in the heat treatment for releasing carbon dioxide, and the maximum endothermic temperature is preferably 260°C or less, more preferably 230°C or less, even more preferably 210°C or less, and even more preferably 190°C or less to increase the amount of carbon dioxide absorbed and improve foamability.

### (Method)

The amine compound (a1) is heated at a heating rate of 10°C/ minute from 23°C to 350°C and the temperature at which the amount of heat absorbed due to evaporation of the amine compound (a1) reaches the maximum is measured, and the temperature is defined as the maximum endothermic temperature of the amine compound (a1).

The amine compound (a1) has an amine value of preferably 400 mg KOH/ g or more, more preferably 500 mg KOH/ g or more, even more preferably 600 mg KOH/g or more, still more preferably 650 mg KOH/g or more, and yet more preferably 700 mg KOH/g or more to increase the amount of carbon dioxide absorbed and improve foamability, and the amine value is preferably 1,500 mg KOH/g or less, more preferably 1,400 mg KOH/g or less, even more preferably 1,300 mg KOH/g or less, still more preferably 1,100 mg KOH/g or less, even more preferably 1,000 mg KOH/g or less, and yet more preferably 850 mg KOH/g or less. The amine value refers to the amount of amine in a compound, which is the number of milligrams of potassium hydroxide (KOH) equivalent to the amount of acid necessary for neutralizing 1 g of the compound.

The amine value may be measured by the following method according to JIS K7237-1995.
(1) 0.1 g of the amine compound (a1) is dissolved in 20 mL of acetic acid.
(2) The amine value is calculated by titrating the solution prepared in (1) above with 0.1 N perchloric acid - acetic acid solution using an automatic potentiometric titrator (e.g., AT-610 made by Kyoto Electronics Manufacturing Co., Ltd.).

The percentage increase of the mass of the amine compound (a1) calculated by the following equation after leaving the amine compound (a1) to stand in an air environment of 23°C and 50% RH for a week is preferably 10% by mass or more, more preferably 15% by mass or more, even more preferably 18% by mass or more, still more preferably 20% by mass or more and still more preferably 23% by mass or more to improve foamability, and it is preferably 50% by mass or less, more preferably 45% by mass or less, even more preferably 40% by mass or less, even more preferably 30% by mass or less and even more preferably 28% by mass or less.

Percentage increase of mass of amine compound (a1) [% by mass] = 100 × amount of increase of mass of amine compound (a1) (g) / (mass of amine compound (a1) (g) + amount of increase of mass of amine compound (a1) (g)).

The percentage increase of the mass of the amine compound (a1) may be specifically measured by the method described in Examples.

The blowing agent of the present invention may be obtained by, for example, contacting the amine compound (a1) with a gas containing carbon dioxide to react the amine compound (a1) with carbon dioxide. In other words, in a preferred method for producing a blowing agent of the present invention, the amine compound (a1) is contacted with a gas containing carbon dioxide to react the amine compound (a1) with carbon dioxide.

The gas containing carbon dioxide may be a simple substance of carbon dioxide, or may be a mixture of carbon dioxide and an inert gas. Use of air as the gas containing carbon dioxide is convenient and preferred. In this regard, the "inert gas" refers to a gas having no influence on the reaction for obtaining a polyurethane urea resin foam described later.

The method preferably further includes a step of obtaining a reaction product (a2) by contacting the amine compound (a1) with a gas containing carbon dioxide and having a carbon dioxide concentration of 0.01% by volume or more and 10% by volume or less to react the amine compound (a1) with carbon dioxide. In other words, the blowing agent of the present invention is preferably a blowing agent produced by a method of contacting the amine compound (a1) with a gas having a carbon dioxide concentration of 0.01% by volume or more and 10% by volume or less to react the amine compound (a1) with carbon dioxide.

The carbon dioxide concentration is preferably 0.01% by volume or more, more preferably 0.02% by volume or more, even more preferably 0.03% by volume or more, and is preferably 10% by volume or less, more preferably 5% by volume or less, even more preferably 1% by volume or less, still more preferably 0.5% by volume or less, and still more preferably 0.1% by volume or less. The gas having a carbon dioxide concentration of 0.01% by volume or more and 10% by volume or less is even more preferably air.

The method of contacting the amine compound (a1) with a gas containing carbon dioxide is not restricted, but it is preferable to keep the amine compound (a1) in the gas containing carbon dioxide at 30°C or lower while stirring or shaking until the desired range of the percentage increase of mass is reached. The pressure when the amine compound (a1) is contacted with a gas containing carbon dioxide is not restricted, but the amine compound is preferably kept at atmospheric pressure or under pressure, and is more preferably kept at atmospheric pressure.

The time for the contact with a gas containing carbon dioxide may be adjusted depending on the above-mentioned temperature, pressure, and amount of carbon dioxide contained in the gas, but when air is used as the gas containing carbon dioxide and keeping is performed at atmospheric pressure, the time for the contact with the gas containing carbon dioxide is preferably 1 hour or more, more preferably 1 day or more, even more preferably 5 days or more, still more preferably 10 days or more, still more preferably 15 days or more, and still more preferably 30 days or more. The upper limit is not restricted, but the time is preferably 100 days or less.

The reaction product (a2) of the amine compound (a1) and carbon dioxide preferably includes at least one selected from the group consisting of carbamic acid, carbamate, carbonate, and hydrogen carbonate.

The blowing agent of the present invention forms a salt as described above because it is a reaction product (a2) of the amine compound (a1) and carbon dioxide, and a molar ratio of a portion derived from the amine compound (a1) to a portion derived from carbon dioxide contained in the blowing agent [amine compound (a1) / carbon dioxide] is preferably 70/30 to 30/70, more preferably 60/40 to 40/60, and even more preferably 55/45 to 45/55.

The water content of the blowing agent of the present invention is 15% by mass or less. A water content in the above range can improve foamability. The water content of the blowing agent of the present invention is 15% by mass or less, preferably 10% by mass or less, and more preferably 5% by mass or less.

The blowing agent of the present invention may be obtained by contacting the amine compound (a1) with a gas containing carbon dioxide, as described above, and in this stage, it is preferable not to add water.

### [Foamable resin composition]

The foamable resin composition of the present invention is a foamable resin composition for obtaining a polyurethane urea resin foam, and is a foamable resin composition comprising a polyisocyanate compound (A), a polyol compound (B), and the blowing agent (C). In other words, the foamable resin composition of the present invention is a foamable resin composition for obtaining a polyurethane urea resin foam, and is a foamable resin composition comprising a polyisocyanate compound (A), a polyol compound (B), and a blowing agent (C) which comprises a reaction product (a2) of an amine compound (a1) and carbon dioxide, the amine compound (a1) comprising at least one selected from the group consisting of xylylenediamine and derivatives thereof, and bis(aminomethyl)cyclohexane and derivatives thereof, and has a water content of 15% by mass or less.

The foamable resin composition of the present invention can provide a polyurethane urea resin foam having improved foamability.

The foamable resin composition of the present invention is a foamable resin composition for obtaining a polyurethane urea resin foam, and may be a foamable resin composition comprising an isocyanate group-terminated prepolymer obtained by reacting a polyisocyanate compound (A) with a polyol compound (B), and the blowing agent (C).

The blowing agent (C) contained in the foamable resin composition of the present invention is the same as the blowing agent described in the section [Blowing agent (blowing agent (C))].

In the foamable resin composition of the present invention, a blowing agent other than the blowing agent (C) may be contained, but it is preferable that the blowing agent should not be substantially contained. The content of the blowing agent other than the blowing agent (C) in the foamable resin composition is preferably 5% by mass or less, more preferably 3% by mass or less, even more preferably 1% by mass or less, still more preferably 0.5% by mass or less, still more preferably 0.1% by mass or less, still more preferably 0% by mass, and it is still more preferable that the blowing agent other than the blowing agent (C) should not be contained.

Examples of blowing agents other than the blowing agent (C) include a halogen-containing hydrocarbon such as chlorofluorocarbon and fluorocarbon; an alicyclic hydrocarbon such as cyclopentane; an organic blowing agent such as dinitropentamethylenetetramine, azodicarbonamide, p,p'-oxybisbenzenesulfonylhydrazide; and an inorganic blowing agent such as sodium hydrogen carbonate.

The content of the blowing agent (C) in the foamable resin composition is such that the ratio of the number of amino groups in the blowing agent (C) to the number of hydroxy groups in the polyol compound (B) (number of amino groups / number of hydroxy groups) is preferably 0.01 or more and 0.7 or less. From the viewpoint of the improvement of foamability, the ratio of the number of amino groups in the blowing agent (C) to the number of hydroxy groups in the polyol compound (B) (number of amino groups / number of hydroxy groups) is preferably 0.01 or more, more preferably 0.05 or more, even more preferably 0.10 or more, even more preferably 0.12 or more, and still more preferably 0.15 or more. From the viewpoint of the improvement of the heat resistance and mechanical strength of a foam, it is preferably 0.7 or less, more preferably 0.6 or less, even more preferably 0.5 or less, even more preferably 0.4 or less, and still more preferably 0.3 or less.

### <Polyisocyanate compound (A)>

The polyisocyanate compound (A) is not particularly limited as long as it includes a compound having 2 or more isocyanate groups, and conventionally known ones can be used. The polyisocyanate compound (A) is preferably a compound having 2 or more isocyanate groups.

Examples of diisocyanate compounds having 2 isocyanate groups include aliphatic isocyanate compounds, such as 1,6-hexamethylene diisocyanate (HDI), 2,2,4-trimethylhexamethylene diisocyanate, methylene diisocyanate, isopropylene diisocyanate, lysine diisocyanate, lysine diisocyanate methyl ester, and 1,5-octylene diisocyanate; alicyclic isocyanate compounds, such as 4,4'-dicyclohexylmethane diisocyanate, isophorone diisocyanate (IPDI), norbornene diisocyanate, hydrogenated tolylene diisocyanate, methylcyclohexane diisocyanate, isopropylidene bis(4-cyclohexylisocyanate), and dimer acid diisocyanate; and aromatic isocyanate compounds, such as 2,4- or 2,6-tolylene diisocyanate (TDI), 4,4'-diphenylmethane diisocyanate (MDI), 1,5-naphthylene diisocyanate, p- or m-xylylene diisocyanate (XDI), tolidine diisocyanate, p-phenylene diisocyanate, diphenyl ether diisocyanate, diphenylsulfone diisocyanate, dianisidine diisocyanate, and tetramethyl-m-xylylene diisocyanate.

Examples of polyisocyanate compounds having 3 or more isocyanate groups include triphenylmethane triisocyanate, triisocyanatophenyl thiophosphate, polymethylene polyphenylene polyisocyanate (polymeric MDI), an isocyanurate modified compound that is a trimer of HDI or TDI, and a biuret modified compound.

The isocyanate compound (A) may be used alone or in combination of 2 or more.

Of these, as the polyisocyanate compound (A), diisocyanate having 2 isocyanate groups is preferred; at least one selected from the group consisting of an aromatic isocyanate compound and an alicyclic isocyanate compound is more preferred; at least one selected from the group consisting of 4,4'-diphenylmethane diisocyanate (MDI) and isophorone diisocyanate (IPDI) is even more preferred; and 4,4'-diphenylmethane diisocyanate (MDI) is still more preferred.

### <Polyol compound(B)>

The polyol compound (B) is not particularly limited, and conventionally known ones can be used.

Examples of the polyol compound (B) include a polyester-based polyol, a polyether-based polyol, a polycarbonate-based polyol, and a polylactone-based polyol.

The polyester-based polyol is not particularly limited as long as it is a condensate of a polyvalent carboxylic acid or a reactive derivative thereof and a polyhydric alcohol, and is obtained by, for example, subjecting a dicarboxylic acid and glycols to condensation polymerization.

Examples of the dicarboxylic acids include aliphatic dicarboxylic acids, such as succinic acid, glutaric acid, adipic acid, azelaic acid, sebacic acid, dodecanedicarboxylic acid, fumaric acid, and maleic acid; aromatic dicarboxylic acids, such as orthophthalic acid, terephthalic acid, isophthalic acid, and 2,6-naphthalenedicarboxylic acid; reactive derivatives of these acids; and alicyclic dicarboxylic acids, such as 1,3-cyclopentanedicarboxylic acid, 1,2-cyclohexanedicarboxylic acid, 1,3-cyclohexanedicarboxylic acid, and 1,4-cyclohexanedicarboxylic acid. These dicarboxylic acids may be used alone or in combination of 2 or more.

Examples of the glycols include aliphatic glycols, such as dimethylene glycol, ethylene glycol, diethylene glycol, triethylene glycol, tetraethylene glycol, propylene glycol, dipropylene glycol, tripropylene glycol, 1,3-propanediol, neopentyl glycol, 2,2-diethyl-1,3-propanediol, butyl ethyl propanediol, 1,2-butanediol, butylene glycol, 1,4-butanediol, dimethyl butanediol, 1,5-pentanediol, 2,4-diethyl pentanediol, 1,6-hexanediol, 3-methyl 1,5-pentanediol, 1,8-octanediol, 1,9-nonanediol, 1,10-decanediol, 1,12-dodecanediol, and polyethylene butylene glycol; alicyclic glycols, such as 1,3-cyclopentanediol, 1,4-cyclohexanediol, 1,4-cyclohexanedimethanol, and 2,2-bis(4-hydroxycyclohexyl)propane; and aromatic glycols, such as m-xylylene glycol, p-xylylene glycol, bisphenol A, bisphenol F, and bisphenol S.

These glycols may be used alone or in combination of 2 or more.

Examples of the polyester-based polyols include condensed polyester polyols, such as polyethylene adipate glycol, polybutylene adipate glycol, polyhexamethylene adipate glycol, and polyethylene butylene adipate glycol.

Examples of the polyether-based polyols include aliphatic polyether polyols, such as polytetramethylene glycol, polyethylene glycol, and polypropylene glycol.

Examples of the polycarbonate-based polyols include polyols obtained by dealcoholization reaction of low-molecular polyols, such as ethylene glycol, propylene glycol, butanediol, pentanediol, hexanediol, octanediol, nonanediol, and 1,4-cyclohexanedimethanol, with carbonate compounds, such as diethylene carbonate, dipropylene carbonate, and diphenyl carbonate.

Examples of the polylactone-based polyols include lactone-based polyester diols obtained by ring-opening polymerizing lactone using the above low-molecular polyols as initiators, such as polylactone diol, polycaprolactone diol, and polymethylvalerolactone diol.

As the polyol compound (B), a polyol used for a water-based polyurethane resin may be used. Examples of the polyol used for a water-based polyurethane resin include, but not limited to, polyols having an anionic group, and preferred are polyols containing a carboxyl group, such as dimethylolpropionic acid, dimethylolbutanoic acid, dimethylolbutyric acid, and dimethylolvaleric acid.

The polyol compound (B) may be used alone or in combination of 2 or more.

Of these, as the polyol compound (B), at least one selected from the group consisting of a polyester-based polyol and a polyether-based polyol is preferred; a polyether-based polyol is more preferred; at least one selected from the group consisting of cyclohexane glycol, polytetramethylene glycol, polyethylene glycol, and polypropylene glycol is even more preferred; at least one selected from the group consisting of cyclohexane glycol and polytetramethylene glycol is still more preferred; and cyclohexane glycol is still more preferred.

In the foamable resin composition of the present invention, the ratio of the number of amino groups in the blowing agent (C) to the total amount of the number of hydroxy groups in the polyol compound (B) and the number of amino groups in the blowing agent (C) is preferably 0.02 or more, more preferably 0.04 or more, even more preferably 0.08 or more, still more preferably 0.12 or more, and still more preferably 0.16 or more. From the same viewpoint, it is preferably 1.0 or less, more preferably 0.8 or less, even more preferably 0.6 or less, still more preferably 0.4 or less, and still more preferably 0.3 or less.

In the foamable resin composition of the present invention, the ratio of the number of isocyanate groups in the polyisocyanate compound (A) to the total amount of the number of hydroxy groups in the polyol compound (B) and the number of amino groups in the blowing agent (C) is preferably 0.5 or more, more preferably 0.6 or more, even more preferably 0.7 or more, still more preferably 0.8 or more, and still more preferably 0.9 or more. From the same viewpoint, it is preferably 1.5 or less, more preferably 1.4 or less, even more preferably 1.3 or less, still more preferably 1.2 or less, and still more preferably 1.1 or less.

The foamable resin composition may also include other components such as a modifying component including a filler and a plasticizer, a flow modifying component such as a thixotropic agent, a pigment, a leveling agent, a tackifier, elastomer fine particles, a curing accelerator, an antifoaming agent and a chemical blowing agent, depending on applications.

The foamable resin composition may contain a solvent, but it is preferable that the foamable resin composition should not substantially contain a solvent. Containing no solvent can achieve high environmental friendliness, and can conveniently provide a foam.

However, from the viewpoint of effectively obtaining the effects of the present invention, the total content of the polyisocyanate compound (A), the polyol compound (B), and the blowing agent (C) in the foamable resin composition, or the total content of the isocyanate group-terminated prepolymer obtained by reacting the polyisocyanate compound (A) with the polyol compound (B), and the blowing agent (C) is preferably 50% by mass or more, more preferably 60% by mass or more, even more preferably 70% by mass or more, still more preferably 80% by mass or more, still more preferably 90% by mass or more, still more preferably 95% by mass or more, still more preferably 98% by mass or more, and still more preferably 99% by mass or more, when the total solid content in the foamable resin composition of the present invention is 100% by mass, and from the same viewpoint, it is preferably 100% by mass or less.

### <Method for preparing foamable resin composition>

The method for preparing the foamable resin composition is not particularly limited. The foamable resin composition may be produced by mixing the polyisocyanate compound (A), the polyol compound (B), the blowing agent (C), and if necessary, other components by a known method using a known apparatus. The foamable resin composition containing the isocyanate group-terminated prepolymer obtained by reacting the polyisocyanate compound (A) with the polyol compound (B) may be produced by reacting the polyisocyanate compound (A) with the polyol compound (B) in advance to obtain an isocyanate group-terminated prepolymer and mixing the prepolymer, the blowing agent (C), and if necessary, other components by a known method using a known apparatus.

### [Polyurethane urea resin foam and method for producing polyurethane urea resin foam]

The polyurethane urea resin foam of the present invention is obtained by foam molding the foamable resin composition of the present invention described above.

The method is not restricted as long as the polyurethane urea resin foam of the present invention is obtained by foam molding the foamable resin composition, but a preferred method for producing a polyurethane urea resin foam includes a step of foam molding the foamable resin composition.

In the step of foaming the foamable resin composition, for example, an amine compound (a1) and carbon dioxide are generated from the reaction product (a2) (blowing agent (C)) by heating the foamable resin composition, and carbon dioxide causes the foamable resin composition to foam, and the foamable resin composition is cured by the reaction between the resulting amine compound (a1), the polyisocyanate compound (A), and the polyol compound (B). In this case, it is preferable to mix the polyol compound (B) with the (blowing agent (C)) in advance and then to react this mixture with the polyisocyanate compound (A). Such a one-shot method provides a polyurethane urea resin foam.

When the foamable resin composition contains the isocyanate group-terminated prepolymer, an amine compound (a1) and carbon dioxide are generated from the reaction product (a2) (blowing agent (C)) by heating the foamable resin composition, and carbon dioxide causes the foamable resin composition to foam, and at the same time, the foamable resin composition is cured by the reaction between the resulting amine compound (a1) and the isocyanate group-terminated prepolymer. Such a prepolymer method also provides a polyurethane urea resin foam.

The temperature and the time of heating in the step of foaming the foamable resin composition may be optionally selected, and the temperature is preferably 50 to 250°C, more preferably 100 to 200°C, and even more preferably 120 to 180°C, from the viewpoint of the reaction speed, productivity, and prevention of decomposition of raw material. The reaction time is preferably 10 minutes to 12 hours, and more preferably 15 minutes to 4 hours.

The pressure in the step of foaming the foamable resin composition may be optionally selected, but foaming is preferably conducted at atmospheric pressure.

It is preferable that the method for producing a polyurethane urea resin foam of the present invention further includes a step of obtaining a reaction product (a2) by contacting the amine compound (a1) with a gas containing carbon dioxide to react the amine compound (a1) with carbon dioxide, before the step of foaming the foamable resin composition.

The gas containing carbon dioxide may be a simple substance of carbon dioxide, or may be a mixture of carbon dioxide and an inert gas. Use of air as the gas containing carbon dioxide is convenient and preferred. In this regard, the "inert gas" refers to a gas having no influence on the reaction for obtaining a polyurethane urea resin foam described later.

The above method preferably further includes a step of obtaining a reaction product (a2) by contacting the amine compound (a1) with a gas containing carbon dioxide and having a carbon dioxide concentration of 0.01% by volume or more and 10% by volume or less to react the amine compound (a1) with carbon dioxide.

The carbon dioxide concentration is preferably 0.01% by volume or more, more preferably 0.02% by volume or more, even more preferably 0.03% by volume or more, and is preferably 10% by volume or less, more preferably 5% by volume or less, even more preferably 1% by volume or less, still more preferably 0.5% by volume or less, and still more preferably 0.1% by volume or less. The gas having a carbon dioxide concentration of 0.01% by volume or more and 10% by volume or less is even more preferably air.

The method of contacting the amine compound (a1) with a gas containing carbon dioxide is not restricted, but it is preferable to keep the amine compound (a1) in a gas containing carbon dioxide at 30°C or lower while stirring or shaking until the desired range of the percentage increase of mass is reached. The pressure when the amine compound (a1) is contacted with a gas containing carbon dioxide is not restricted, but the amine compound is preferably kept at atmospheric pressure or under pressure, and is more preferably kept at atmospheric pressure.

The reaction product (a2) of the amine compound (a1) and carbon dioxide preferably includes at least one selected from the group consisting of carbamic acid, carbamate, carbonate, and hydrogen carbonate.

In the polyurethane urea resin foam of the present invention, the ratio of the number of amino groups in the blowing agent (C) to the total amount of the number of hydroxy groups in the polyol compound (B) and the number of amino groups in the blowing agent (C) is preferably 0.02 or more, more preferably 0.04 or more, even more preferably 0.08 or more, still more preferably 0.12 or more, and still more preferably 0.16 or more. From the same viewpoint, it is preferably 1.0 or less, more preferably 0.8 or less, even more preferably 0.6 or less, still more preferably 0.4 or less, and still more preferably 0.3 or less.

In the polyurethane urea resin foam of the present invention, the ratio of the number of isocyanate groups in the polyisocyanate compound (A) to the total amount of the number of hydroxy groups in the polyol compound (B) and the number of amino groups in the blowing agent (C) is preferably 0.5 or more, more preferably 0.6 or more, even more preferably 0.7 or more, still more preferably 0.8 or more, and still more preferably 0.9 or more. From the same viewpoint, it is preferably 1.5 or less, more preferably 1.4 or less, even more preferably 1.3 or less, still more preferably 1.2 or less, and still more preferably 1.1 or less.

### Examples

Hereinafter the present invention will be described with reference to Examples, but the present invention is not limited to Examples. In the present Examples, the respective properties were measured by the following methods.

### (Acid dissociation constant (pKa) of amine compound)

The acid dissociation constant of the amine compound was measured by the following measurement method.
(1) 0.2 g of the amine compound was dissolved in 30 mL of purified water.
(2) The acid dissociation constant (pKa) was calculated by titrating the solution prepared in (1) above with 0.1 N perchloric acid - acetic acid solution using an automatic potentiometric titrator (AT-610 made by Kyoto Electronics Manufacturing Co., Ltd.).

The temperature in the measurement was 25 ± 2°C.

### (Amine value of amine compound)

The amine value was measured by the following measurement method according to JIS K7237-1995.
(1) 0.1 g of the amine compound was dissolved in 20 mL of acetic acid.
(2) The amine value was calculated by titrating the solution prepared in (1) above with 0.1 N perchloric acid - acetic acid solution using an automatic potentiometric titrator (AT-610 made by Kyoto Electronics Manufacturing Co., Ltd.)

With regard to ethylenediamine, calculated values are shown in Table 1 because measurement under the above measurement conditions was not able to be conducted.

### (Maximum endothermic temperature of amine compound)

The maximum endothermic temperature of the amine compound was measured by subjecting the amine compound to DTA as described below. First, differential scanning calorimetry of the amine compound was performed under conditions of a temperature range of 23 to 350°C, a heating rate of 10°C/minute and a nitrogen atmosphere using a differential thermogravimeter (product name DTG-60 made by Shimadzu Corporation). The temperature at which the amount of heat absorbed due to the evaporation of the amine compound was the maximum was calculated from the DTA curve obtained, and the temperature was determined as the maximum endothermic temperature of the amine compound.

### (Maximum carbon dioxide (CO₂) release temperature of amine compound)

A carbon dioxide detector and a Petri dish were placed in an openable desiccator (inner dimension: 370 mm × 260 mm × 272 mm). Subsequently the amine compound (5 mmol) was added to the Petri dish in the desiccator and the door was immediately closed to leave the amine compound to stand in the desiccator in an air environment at 23°C and 50%RH for 24 hours. The initial concentration of carbon dioxide was adjusted to about 400 ppm.

Then the amine compound was taken out of the desiccator to give an amine compound with carbon dioxide absorbed. The maximum carbon dioxide release temperature of the amine compound with carbon dioxide absorbed was measured by subjecting the amine compound to DSC as described below. First, differential scanning calorimetry of the amine compound was performed under conditions of a temperature range of 23 to 250°C, a heating rate of 10°C/ minute and a nitrogen atmosphere using a differential thermogravimeter (product name DTG-60 made by Shimadzu Corporation). The temperature at which the amount of heat absorbed due to the desorption of carbon dioxide was the maximum was calculated from the DSC curve obtained, and the temperature was determined as the maximum carbon dioxide release temperature of the amine compound.

### (Maximum carbon dioxide (CO₂) release temperature of amine compound)

A carbon dioxide detector and a Petri dish were placed in an openable desiccator (inner dimension: 370 mm × 260 mm × 272 mm). Subsequently, the amine compound (5 mmol) was added to the Petri dish in the desiccator and the door was immediately closed to leave the amine compound to stand in the desiccator in an air environment at 23°C and 50% RH for 24 hours. The initial concentration of carbon dioxide was adjusted to about 400 ppm.

Then the amine compound was taken out of the desiccator to give an amine compound with carbon dioxide absorbed. The maximum carbon dioxide release temperature of the amine compound with carbon dioxide absorbed was measured by subjecting the amine compound to DSC as described below. First, differential scanning calorimetry of the amine compound was performed under conditions of a temperature range of 23 to 250°C, a heating rate of 10°C/minute and a nitrogen atmosphere using a differential thermogravimeter (product name DTG-60 made by Shimadzu Corporation). The temperature at which the amount of heat absorbed due to the desorption of carbon dioxide was the maximum was calculated from the DSC curve obtained, and the temperature was determined as the maximum carbon dioxide release temperature of the amine compound.

### (Water content in blowing agent and composition of blowing agent)

The water content in the blowing agent produced in each of Examples and Comparative Examples and the composition of the blowing agent were measured using an organic elemental microanalyzer (Micro Corder JM10 made by J-Science Lab Co., Ltd. (Examples 1 and 2, and Comparative Example 2) or a Yanaco CHN Corder MT-5 made by Yanaco Technical Science Corp. (Examples 3 and 4, and Comparative Examples 1, 3 and 4)).

### (Evaluation of foamability)

The foamability of the foamable resin composition was evaluated based on the volume increase ratio (times, foaming ratio) of the polyurethane urea resin foam. The volume increase ratio is a value obtained by dividing the thickness of the foam after foaming by the thickness thereof before foaming when foaming is performed in a rectangular parallelepiped container whose bottom face shape (area of the base) is fixed. A higher volume increase ratio suggests excellent foamability.

The following amine compounds, polyisocyanate compounds, and polyol compounds were used in Examples.

### (Amine compound)

MXDA: metaxylylenediamine (made by Mitsubishi Gas Chemical Company, Inc.)
1,3-BAC: 1,3-bis(aminomethyl)cyclohexane (made by Mitsubishi Gas Chemical Company, Inc.)
IPDA: isophoronediamine (made by Tokyo Chemical Industry Co., Ltd.)
Ethylenediamine: ethylenediamine (made by Tokyo Chemical Industry Co., Ltd.)

### (Polyisocyanate compound)

IPDI: isophorone diisocyanate (made by Tokyo Chemical Industry Co., Ltd.)
MDI: 4,4'-diphenylmethane diisocyanate (made by Tokyo Chemical Industry Co., Ltd.)

### (Polyol compound)

CHG: 1,4-cyclohexanedimethanol (made by Tokyo Chemical Industry Co., Ltd.)
PTMG1000: polytetramethylene glycol (made by FUJIFILM Wako Pure Chemical Corporation)

### Example 1

### (1) Production of blowing agent (absorption of carbon dioxide into amine compound)

MXDA as an amine compound was put in a container and left to stand in an air environment at 23°C and 50% RH for a week. By doing so MXDA and carbon dioxide in the air were reacted to give a blowing agent (carbonate of MXDA). At that stage, to suppress uneven reaction, the container in which the amine compound was placed was shaken as necessary so as not to leave unreacted MXDA.

Next, the amount of increase of the mass of MXDA was measured and the percentage increase of the mass of the amine compound was calculated by the following equation. Percentage increase of mass of amine compound [% by mass] = 100 × amount of increase of mass of amine compound (g) / (initial mass of amine compound (g) + amount of increase of mass of amine compound (g))

### (2) Production of foamable resin composition

To the blowing agent (carbonate of MXDA), CHG as a polyol compound, and IPDI as a polyisocyanate compound were added, and they were mixed with stirring for 2 minutes to give a foamable resin composition. The amounts of the blowing agent, CHG, and IPDI were determined so that the molar ratio of the number of amino groups in MXDA for constituting the blowing agent / the number of hydroxy groups in CHG / the number of isocyanate groups in IPDI was 0.2/0.8/1.0.

### (3) Production of polyurethane urea resin foam

The foamable resin composition obtained in (2) was put in a rectangular parallelepiped mold having a bottom face of 12 cm × 12 cm so that the foamable resin composition in the mold had a thickness of about 3 mm, and heated under conditions of a heating temperature of 150°C and a heating time of 30 minutes using a hot air dryer to cure and foam the foamable resin composition. A polyurethane urea resin foam was thus obtained. Visual observation confirmed that a foam structure was formed in the resulting polyurethane urea resin foam. Furthermore, the resulting polyurethane urea resin foam was evaluated for the foamability. The results obtained are shown in Table 1.

### (Example 2 and Comparative Example 1)

The respective polyurethane urea resin foams were obtained in the same manner as in Example 1 except for changing the type of the amine compound to compounds shown in Table 1.

Visual observation confirmed that a foam structure was formed in the resulting polyurethane urea resin foam. Furthermore, the resulting polyurethane urea resin foam was evaluated for the foamability. The results are shown in Table 1.

### (Examples 3 to 6 and Comparative Examples 2 to 4)

The respective polyurethane urea resin foams were obtained in the same manner as in Example 1 except for changing the types of the amine compound, the polyol compound, and the polyisocyanate compound to compounds shown in Table 1.

Visual observation confirmed that a foam structure was formed in the resulting polyurethane urea resin foam. Furthermore, the resulting polyurethane urea resin foam was evaluated for the foamability. The results are shown in Table 1.

### (Example 7)

A polyurethane urea resin foam was obtained in the same manner as in Example 5 except that in Example 5 (amine compound: MXDA, polyol compound: CHG, polyisocyanate compound: MDI), the standing time in (1) Production of blowing agent (absorption of carbon dioxide into amine compound) was changed to 10 weeks from 1 week.

Visual observation confirmed that a foam structure was formed in the resulting polyurethane urea resin foam. Furthermore, the resulting polyurethane urea resin foam was evaluated for the foamability. The results are shown in Table 1.

### (Example 8 and Comparative Examples 5 to 6)

The respective polyurethane urea resin foams were obtained in the same manner as in Example 7 except for changing the types of the amine compound to compounds shown in Table 1.

Visual observation confirmed that a foam structure was formed in the resulting polyurethane urea foam. Furthermore, the resulting polyurethane urea resin foam was evaluated for the foamability. The results obtained are shown in Table 1.

From the results of Examples 5 to 8, it can be seen that the foamability is improved by taking enough time to contact the amine compound with air (carbon dioxide absorption time) particularly in the production of the blowing agent of the present invention.

**Table 1**

| | Amine compound | | | | | | Blowing agent | | | Composition | | |
|---|---|---|---|---|---|---|---|---|---|---|---|---|
| | Name | Maximum CO₂ release temperature [°C] | Maximum endothermic temperature [°C] | Amine value [mgKOH/g] | pKa | CO₂ absorption time [week(s)] | Percentage increase of mass [% by mass] | Composition ratio (amine/CO₂) | Water content [% by mass] | Polyol compound | Polyisocyanate compound | Foaming ratio [times] |
| Example 1 | MXDA | 135.5 | 183.5 | 824 | 9.5 | 1 | 24.1 | 1/1 | 0 | CHG | IPDI | 3.4 |
| Example 2 | 1,3-BAC | 125.7 | 160.9 | 789 | 10.8 | 1 | 25.9 | 4/3 | 13 | CHG | IPDI | 2.4 |
| Comparative Example 1 | Ethylenediamine | 103.4 | 126.7 | 1867 (calculated value) | 9.8 | 1 | 44.3 | 2/1 | 47 | CHG | IPDI | 1.8 |
| Example 3 | MXDA | 135.5 | 183.5 | 824 | 9.5 | 1 | 24.1 | 1/1 | 0 | PTMG 1000 | MDI | 2.9 |
| Example 4 | 1,3-BAC | 125.7 | 160.9 | 789 | 10.8 | 1 | 25.9 | 4/3 | 13 | PTMG 1000 | MDI | 1.5 |
| Comparative Example 2 | Ethylenediamine | 103.4 | 126.7 | 1867 (calculated value) | 9.8 | 1 | 44.3 | 2/1 | 47 | PTMG 1000 | MDI | 1.4 |
| Example 5 | MXDA | 135.5 | 183.5 | 824 | 9.5 | 1 | 24.1 | 1/1 | 0 | CHG | MDI | 1.8 |
| Example 6 | 1,3-BAC | 125.7 | 160.9 | 789 | 10.8 | 1 | 25.9 | 4/3 | 13 | CHG | MDI | 2.3 |
| Comparative Example 3 | IPDA | 114.4 | 168.8 | 659 | 10.4 | 1 | 23.5 | 1/1 | 8 | CHG | MDI | 1.7 |
| Comparative Example 4 | Ethylenediamine | 103.4 | 126.7 | 1867 (calculated value) | 9.8 | 1 | 44.3 | 2/1 | 47 | CHG | MDI | 1.2 |
| Example 7 | MXDA | 135.5 | 183.5 | 824 | 9.5 | 10 | 24.1 | 1/1 | 0 | CHG | MDI | 2.5 |
| Example 8 | 1,3-BAC | 125.7 | 160.9 | 789 | 10.8 | 10 | 25.9 | 4/3 | 9 | CHG | MDI | 2.8 |
| Comparative Example 5 | IPDA | 114.4 | 168.8 | 659 | 10.4 | 10 | 23.5 | 1/1 | 8 | CHG | MDI | 1.5 |
| Comparative Example 6 | Ethylenediamine | 103.4 | 126.7 | 1867 (calculated value) | 9.8 | 10 | 44.3 | 1/1 | 3 | CHG | MDI | 1.5 |

Table 1 shows that a polyurethane urea resin foam having improved foamability can be produced by using the blowing agents and the foamable resin compositions of Examples without using a conventional environmentally harmful blowing agent. Furthermore, the blowing agents and the foamable resin compositions of Examples contribute to reduction of environmental impacts also because they can be produced while absorbing carbon dioxide from the environment.

## Claims

1. A blowing agent for obtaining a polyurethane urea resin foam, comprising:
a reaction product (a2) of an amine compound (a1) and carbon dioxide, the amine compound (a1) comprising at least one selected from the group consisting of xylylenediamine and derivatives thereof, and bis(aminomethyl)cyclohexane and derivatives thereof, wherein
a water content of the blowing agent is 15% by mass or less.

2. The blowing agent according to claim 1, wherein a percentage increase of a mass of the amine compound (a1) calculated by the following equation when the amine compound (a1) is left to stand in an air environment of 23°C and 50% RH for a week is 10% by mass or more and 50% by mass or less: percentage increase of mass of amine compound (a1) [% by mass] = 100 × amount of increase of mass of amine compound (a1) (g) / (mass of amine compound (a1) (g) + amount of increase of mass of amine compound (a1) (g)).

3. The blowing agent according to claim 1 or 2, wherein a molar ratio of a portion derived from the amine compound (a1) to a portion derived from carbon dioxide [amine compound (a1) / carbon dioxide] is 70/30 to 30/70.

4. The blowing agent according to any one of claims 1 to 3, being produced by a method of contacting the amine compound (a1) with a gas having a carbon dioxide concentration of 0.01% by volume or more and 10% by volume or less to react the amine compound (a1) with carbon dioxide.

5. A foamable resin composition for obtaining a polyurethane urea resin foam, comprising:
a polyisocyanate compound (A), a polyol compound (B), and the blowing agent (C) according to any one of claims 1 to 4.

6. A foamable resin composition for obtaining a polyurethane urea resin foam, comprising:
an isocyanate group-terminated prepolymer obtained by reacting a polyisocyanate compound (A) with a polyol compound (B), and the blowing agent (C) according to any one of claims 1 to 4.

7. The foamable resin composition according to claim 5 or 6, wherein the polyisocyanate compound (A) comprises a compound having 2 or more isocyanate groups.

8. The foamable resin composition according to any one of claims 5 to 7, wherein a content of a blowing agent other than the blowing agent (C) is 5% by mass or less.

9. The foamable resin composition according to any one of claims 5 to 8, wherein a ratio of the number of amino groups in the blowing agent (C) to the total amount of the number of hydroxy groups in the polyol compound (B) and the number of amino groups in the blowing agent (C) is 0.02 or more and 1.0 or less.

10. The foamable resin composition according to any one of claims 5 to 9, wherein a ratio of the number of isocyanate groups in the polyisocyanate compound (A) to the total amount of the number of hydroxy groups in the polyol compound (B) and the number of amino groups in the blowing agent (C) is 0.5 or more and 1.5 or less.

11. The foamable resin composition according to any one of claims 5 to 10, wherein the polyisocyanate compound (A) is at least one selected from the group consisting of 4,4'-diphenylmethane diisocyanate (MDI) and isophorone diisocyanate (IPDI).

12. A polyurethane urea resin foam obtained by foam molding the foamable resin composition according to any one of claims 5 to 11.

13. A method for producing a polyurethane urea resin foam, comprising a step of foam molding the foamable resin composition according to any one of claims 5 to 11.
